**Europäisches Patentamt**

**European Patent Office**

**Office européen des brevets**

(19)

(11) Veröffentlichungsnummer: **0 027 234**

**A2**

(12) # EUROPÄISCHE PATENTANMELDUNG

(21) Anmeldenummer: **80106051.8**

(22) Anmeldetag: **06.10.80**

(51) Int. Cl.³: **G 02 B 5/00**
**G 02 B 19/00**

(30) Priorität: **11.10.79 DE 2941313**

(43) Veröffentlichungstag der Anmeldung:
**22.04.81 Patentblatt 81/16**

(84) Benannte Vertragsstaaten:
**BE FR GB IT LU NL**

(71) Anmelder: **SIEMENS AKTIENGESELLSCHAFT Berlin und München**
**Postfach 22 02 61**
**D-8000 München 22(DE)**

(72) Erfinder: **Pape, Heinz, Dipl.-Phys.**
**Forstenrieder-Allee 17**
**D-8000 München 71(DE)**

(72) Erfinder: **Quella, Ferdinand, Dr.**
**Parkstrasse 9**
**D-8035 Gauting(DE)**

(54) Lampenloses Signalelement.

(57) Herstellung von Schildern und Rückstrahlern unter Verwendung eines Fluoreszenzkörpers als Lichtsammelvorrichtung, die das Licht großflächig sammelt und in Richtung auf den Beobachter durch Auskoppelstellen (Kerben, aufgedruckte Pigmente) konzentriert wieder abstrahlt.

# FIG 1

EP 0 027 234 A2

SIEMENS AKTIENGESELLSCHAFT          Unser Zeichen
Berlin und München                  VPA  79 P 7 2 0 0

Lampenloses Signalelement.

Die Erfindung betrifft ein lampenloses Signalelement für
Schilder und Rückstrahler (z. B. Haus- und Autonummern,
Tür-, Verkehrs- und Warnschilder, Reklamen, Fahrrad- und
Autorückstrahler, Wegemarkierungen, Lichtleitspuren) das
eine gute Erkennbarkeit des Signals bei Tag und Nacht ermöglicht. Die Signale können auch beleuchtet und schaltbar sein.

Die Erkennbarkeit der verschiedenen Signale wurde bisher
auf unterschiedliche Weise gesichert:

- bei Haus- und Autonummern, Tür-, Warn- und Verkehrsschildern durch starken Kontrast (z. B. hell auf
  dunklem Grund),
- bei Schildern (z. B. Verkehrs- und Warnschildern) durch
  Auftragen eines fluoreszierenden oder phosphoreszierenden Farbanstrichs, der beim Anstrahlen leuchtet,
- bei Reklamen im allgemeinen durch eine Beleuchtung
  (z. B. Gasentladungsröhren),

Wed 1 Plr/5.10.1979

- bei Rückstrahlern (z. B. Fahrrad-, Autorückstrahler)
durch lichtrückstreuende Elemente,
- bei Wegemarkierungen (z. B. Lichtleitspuren, Fahrbahnmarkierungen) entweder durch lichtrückstreuende Elemente oder zur besseren Erkennbarkeit (ohne direkte Anstrahlung) durch einen phosphoreszierenden Farbanstrich.

Der Erfindung liegt die Aufgabe zugrunde, mit möglichst
einfachen Mitteln lampenlose Signalelemente für Schilder
bzw. Rückstrahler zu realisieren, bei denen die Erkennbarkeit bei Tag und Nacht gewährleistet ist. Diese Aufgabe
wird dadurch gelöst, daß ein Fluoreszenzkörper als Lichtsammelvorrichtung vorgesehen ist, bestehend aus einem
Körper aus einem transparenten Material mit einem
Brechungsindex > 1, der fluoreszierende Partikel enthält
und auftreffendes Licht durch Fluoreszenzstreuung und
nachfolgende Reflexionen an seinen Grenzflächen sammelt
und Fluoreszenzlicht konzentriert über Auskoppelbereiche
abgibt.

Die Erkennbarkeit nach der Erfindung hergestellter Schilder und Rückstrahler wird bei Tage dadurch gewährleistet,
daß Umgebungslicht durch den Körper gesammelt wird und
über Auskoppelstellen (reflektierend bedruckte Kerben
oder aufgedruckte Pigmente) abgestrahlt wird. Bei Nebel
werden solche Schilder besonders auffällig strahlen, da
das kurzwellige Anregungslicht im Vergleich zum sichtbaren Anteil mit sehr hoher Intensität vertreten ist.
Bei Nacht leuchten diese Elemente durch Lichtsammlung
beim Anstrahlen z. B. mit Scheinwerfern. Vorteilhafterweise wird das Absorptionsspektrum des Fluoreszenzfarbstoffes eventuell unter Verwendung eines oder mehrerer
weiterer Fluoreszenzfarbstoffe (Patentanmeldung
P 29 08 770.5) auf das Glühlampenspektrum von Scheinwerfern abgestimmt.

Der besondere Vorteil dieser Schilder gegenüber herkömmlichen besteht darin, daß Licht großflächig gesammelt wird, und zwar auch auf Flächen, die nicht direkt zum Signalbereich gehören und durch Lichtleitung dem Auskoppelbereich zugeführt wird. Bei gleichmäßiger Ausleuchtung des Fluoreszenzkörpers ist in erster Näherung die Lichtintensität des Signals gegenüber einem Anstrich mit derselben Fluoreszenzfarbe um einen Faktor erhöht, der proportional zum Verhältnis Auskoppelfläche/Sammelfläche des Fluoreszenzkörpers ist.

Nach einer Weiterbildung der Erfindung sind die Fluoreszenzkörper im Auskoppelbereich mit phosphoreszierenden Pigmenten (siehe Patentanmeldung P 29 30 173.3) versehen. Dadurch wird eine Erkennbarkeit bei Tag und Nacht ermöglicht.

Um einen größeren Kontrast des Signals gegenüber der Umgebung zu erzielen und/oder um die Anregung von phosphoreszierenden Pigmenten im Auskoppelbereich zu erleichtern, besteht dieser Bereich aus nicht eingefärbtem, klarem Material (getrennt angefertigt oder Fluoreszenzfarbstoff zerstört).

Die Lichtsammelwirkung wird dadurch praktisch nicht behindert. Bei Tag leuchten die Schilder unter Ausnutzung von Umgebungslicht, während sich bei Nacht ein Leuchten ohne Anstrahlen durch das phosphoreszierende Pigment ergibt. Die Abklingzeiten der phosphoreszierenden Pigmente liegen in der Größenordnung von Stunden. Bei vorübergehender Anstrahlung, z. B. durch Autoscheinwerfer oder eine Treppenhausbeleuchtung, erfolgt eine zusätzliche Neuanregung der Phosphoreszenz. Eine solche Anordnung ist besonders geeignet zur Energieeinsparung, da sie ohne direkte Beleuchtung auskommt. Zur besseren Erkennbarkeit bei Haus- und Autonummern können z. B. letztere aus Kunststoffolien hergestellt werden und anschließend nur noch mit den auskoppelnden Pigmenten bedruckt werden. Weitere Anwendungen sind Verkehrs-, Warnschilder, Reklamen, Fahrrad- und Autorückstrahler, Lichtleitspuren und Fahrbahnmarkierungen. Günstige Einfärbungen sind rote oder orange fluoreszierende Farben als Warnfarben, z. B. bei Verkehrs- und Warnschildern.

Nach einer Weiterbildung der Erfindung wird das gesamte Element als Lichtsammelvorrichtung ausgebildet. Dies gilt z. B. für Rückstrahler oder Lichtleitspuren, um möglichst viel eingestrahltes Licht zu sammeln. Phosphoreszierende Pigmente sind auch in diesem Fall im Auskoppelbereich häufig sinnvoll.

In manchen Fällen kann zusätzlich ein lichtdurchlässiges Gehäuse vorgesehen sein, um die Fluoreszenzfarbe zu verdecken (z. B. Milchglas). Dies behindert die Funktion der Lichtsammelvorrichtung nicht, solange außer an Auskoppelstellen kein optischer Kontakt mit dieser Abdeckung besteht.

Die Lösung nach der Erfindung schließt eine zusätzliche Beleuchtung (z. B. eine Nummernschildbeleuchtung) nicht aus. Dann wird das künstlich erzeugte Licht gesammelt und konzentriert abgestrahlt. Eine Anstrahlung von außen würde die Lichtintensität an den Auskoppelstellen weiter erhöhen.

Die Herstellung der lampenlosen Signalelemente nach der Erfindung erfolgt vorzugsweise aus hochtransparenten Kunstmaterialien, z. B. Polymethylmethacrylat, die durch Spritzgießen, Pressen oder Tiefziehen hergestellt und direkt bei der Verarbeitung eingefärbt werden. Auch eine nachträgliche Einfärbung, z. B. durch Tauchen in eine fluoreszierende Farblösung, ist möglich. Um den größten Teil des gesammelten Lichtes nur durch die Auskoppelstellen abzustrahlen, ist es in manchen Fällen vorteilhaft, die Ränder (z. B. bei einer Platte) zu verspiegeln oder mit rückstreuenden Pigmenten zu versehen.

Im Rahmen der Erfindung sind Körper als Signalelemente
vorgesehen, die aus einem festen, transparenten Material
bestehen, in das phosphoreszierende Partikel eingearbeitet sind.

Der besondere Vorteil eines solchen Körpers besteht darin, daß er in der Dunkelheit eine billige, robuste,
handliche und vor allem oft und vielseitig verwendbare,
aktive Lichtquelle darstellt. Man denke beispielsweise
an eine einfache Platte oder die Umrandung eines rückstrahlenden Warndreiecks. Ein in der Dunkelheit am
Straßenrand stehendes land- oder forstwirtschaftliches
Fahrzeug (z. B. Rübenwagen) oder ein liegengebliebener
PKW kann durch Anbringen von einem oder mehreren solchen
phosphoreszierenden Körpern, die im Handschuhfach oder
einer Tasche am Traktor mitgeführt und im Scheinwerferlicht angeregt wurden, leicht und deutlich kenntlich gemacht werden. Vorteile gegenüber:

a) einem phosphoreszierenden Anstrich oder einer Klebefolie:
   - häufig verwendbar, beweglich, vielseitig, schmutz-
     und verwitterungssicher;
b) Rückstrahlern:
   - selbstleuchtend, schmutz- und bruchsichere Aufbewahrung;
c) Lampe (Batterie, Petroleum):
   - billiger, einfacher und störungsunanfällig, weniger
     Bruch- und Diebstahl gefährdet.

Häufig genügt die Sicherung des Fahrzeugs für einige
Stunden. Die Sicherheit von Fußgängern in der Dunkelheit

. 0027234

könnte damit ebenfalls erhöht werden.

Die Erfindung wird anhand der Figuren erläutert. Es zeigen:

Figur 1 die Funktionsweise eines Fluoreszenzkörpers, z. B. als Schild,

Figur 2 einen Seitenschnitt durch einen Rückstrahler oder ein Rücklicht,

Figur 3 einen Seitenschnitt durch einen runden Fahrbahnrandmarkierungspfosten und

Figur 4 einen Seitenschnitt durch eine Lichtleitspur.

In den Figuren sind gleiche Bauteile mit den gleichen Bezugszeichen versehen. Mit 1 ist der als Lichtsammelvorrichtung ausgebildete Fluoreszenzkörper bezeichnet. Das Bezugszeichen 2 kennzeichnet die Auskoppelstellen, die als reflektierendbeschichtete Kerben oder Pigmentaufdruck (Pigmentfarbe: weiß, farbig oder fluoreszierend) ausgeführt sein können. Randverspiegelungen sind mit 3 bezeichnet. Im Falle von phosphoreszierenden Farbstoffen ist der Fluoreszenzfarbstoff im Bereich 4 zerstört. Phosphoreszierende Pigmente sind jedoch nicht unbedingt notwendig. Umgebungslicht 5 gelangt in die Platte, wird absorbiert, Fluoreszenzlicht emittiert und über die Auskoppelstellen 2 in Richtung auf den Beobachter B ausgekoppelt.

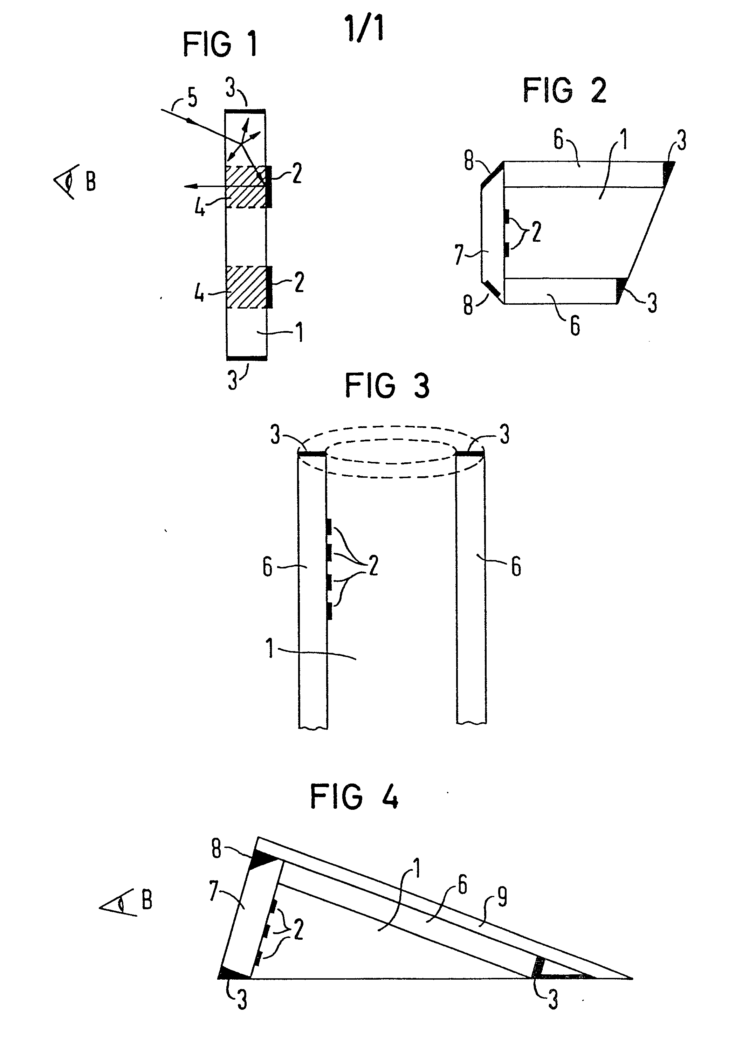

Figur 2 zeigt einen Seitenschnitt durch einen Rückstrahler oder ein Rücklicht. In diesem Fall besteht der Fluoreszenzkörper 1 aus der Frontfläche 7 und den Seitenflächen 6, die auch als Lichtsammler ausgebildet sind. Sie stehen mit der Frontfläche in direktem optischen Kontakt. Die Lichtauskoppelung erfolgt über die Auskoppelstellen 2 (Pigmente, auch phosphoreszierend). Zur Umlenkung des Lichtes sind die Ecken 8 verspiegelt. Es kann zusätzlich eine Beleuchtung durch eine Lampe vorgesehen sein.

Figur 3 zeigt einen zylindrischen Fluoreszenzkörper 1 (Fahrbahnrandmarkierungspfosten) im Schnitt. Mit 6 ist der lichtsammelnde Mantel gekennzeichnet. 2 stellt die Auskoppelstellen (Kerben, Pigmente, auch phosphoreszierend möglich) dar. Die Kanten 3 sind verspiegelt oder lichtrückstreuend bedruckt.

Figur 4 ist der Seitenschnitt durch eine Lichtleitspur, wie sie z. B. in Sälen oder Rollbahnen eingesetzt werden könnte. Mit 1 ist wiederum der Lichtsammler (Fluoreszenzkörper) bezeichnet, der aus den Flächen 6 und 7 besteht. Der Spiegel 8 dient der Lichtführung. Außen ist ein lichtdurchlässiges (z. B. weiß streuendes) Gehäuse 9 angebracht.

7 Patentansprüche
4 Figuren

Patentansprüche.

1. Lampenloses Signalelement, insbesondere für Schilder und Rückstrahler (z. B. Haus- und Autonummern, Tür-, Verkehrs- und Warnschilder, Reklamen, Fahrrad- und Autorückstrahler, Wegemarkierungen, Lichtleitspuren), d a - d u r c h   g e k e n n z e i c h n e t ,   daß eine Lichtsammelvorrichtung (Fluoreszenzkörper) (1) vorgesehen ist, bestehend aus einem Körper aus einem transparenten Material mit einem Brechungsindex >1, der fluoreszierende Partikel enthält und auftreffendes Licht durch Fluoreszenzstreuung und nachfolgende Reflexionen an seinen Grenzflächen sammelt und das Fluoreszenzlicht konzentriert über Auskoppelbereiche (2) abgibt.

2. Lampenloses Signalelement nach Anspruch 1,   d a - d u r c h   g e k e n n z e i c h n e t ,   daß nicht eingefärbtes, klares Lichtleitermaterial und/oder Spiegel (8) zur Führung des Fluoreszenzlichtes Verwendung finden.

3. Lampenloses Signalelement nach Anspruch 1,   d a - d u r c h   g e k e n n z e i c h n e t ,   daß Flächen des Fluoreszenzkörpers oder Lichtleiters, die das Fluoreszenzlicht nicht total reflektieren und an denen keine Lichtauskopplung erwünscht ist mit dielektrischen, metallischen oder diffusen Reflektoren (3) (mit oder ohne optischen Kontakt mit der Fläche) versehen sind.

4. Signalelement nach Anspruch 1,   d a d u r c h   g e - k e n n z e i c h n e t ,   daß im Auskoppelbereich (2) phosphoreszierende Partikel aufgebracht sind.

5. Signalelement nach Anspruch 1,   d a d u r c h   g e - k e n n z e i c h n e t ,   daß der Fluoreszenzfarbstoff im Auskoppelbereich (4) zerstört wird (z. B.

UV-Licht) oder dieser Bereich getrennt aus nicht eingefärbtem, klarem Material angefertigt wird (Figur 1).

6. Signalelement nach Anspruch 1, d a d u r c h  g e -
k e n n z e i c h n e t ,  daß das gesamte Element
(einschließlich der Seitenwände) zur Lichtsammlung beiträgt (Figur 2 und 3).

7. Signalelement nach Anspruch 1, d a d u r c h  g e -
k e n n z e i c h n e t ,  daß phosphoreszierende Partikel
in transparentes Material eingearbeitet sind, so daß
ein nicht ortsgebundener phosphoreszierender Signalkörper
entsteht.

FIG 1

FIG 2

FIG 3

FIG 4